(19) **Europäisches Patentamt**

**European Patent Office**

**Office européen des brevets**

(11) **EP 1 626 512 A1**

(12) **EUROPEAN PATENT APPLICATION**

(43) Date of publication:
**15.02.2006 Bulletin 2006/07**

(51) Int Cl.:
***H04B 10/08*** (2006.01)

(21) Application number: **04292019.9**

(22) Date of filing: **09.08.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(71) Applicant: **ALCATEL**
**75008 Paris (FR)**

(72) Inventors:
• **Lavigne, Bruno**
  **92160 Antony (FR)**
• **Peloso, Pierre**
  **91140 Villebon sur Yvette (FR)**

(74) Representative: **Schäfer, Wolfgang et al**
**Dreiss, Fuhlendorf, Steimle & Becker**
**Postfach 10 37 62**
**70032 Stuttgart (DE)**

(54) **Method of determining an optical signal to noise ratio (OSNR) and optical transmission system**

(57) The present invention relates to a method of determining an optical signal to noise ratio (OSNR) in an optical system (100), in particular an optical transmission system (100) with wavelength division multiplexing (WDM), wherein a signal (s_wdm), in particular a wavelength division multiplexing (WDM) signal, is transmitted.

The method comprises the following steps:

- modifying said WDM signal (s_wdm) by means of at least one auxiliary signal (s_aux) thus obtaining a modified signal (s_mod),

- transmitting said modified signal (s_mod),

- receiving said modified signal (s_mod),

- determining said optical signal to noise ratio (OSNR) based on said received modified signal (s_mod).

Fig. 2

EP 1 626 512 A1

## Description

## Specification

The present invention relates to a method of determining an optical signal to noise ratio in an optical system, in particular a transparent hybrid network or an optical transmission system with wavelength division multiplexing, wherein a signal, in particular a wavelength division multiplexing (WDM) signal, is transmitted.

The present invention further relates to an optical transmission system for transmitting a signal, in particular a wavelength division multiplexing (WDM) signal.

The measurement of an optical signal to noise ratio (OSNR) according to the prior art approach is performed using optical spectrum analyzers which determine an optical power of an in band signal, i.e. a signal that comprises a frequency range reserved for a distinct wavelength channel in a WDM system. Adjacent to said in band signal there are two frequency ranges not used for allocating WDM channels but rather for separating neighbour WDM channels. Said frequency ranges are also referred to as out of band signals, an optical power of which is also determined by using said optical spectrum analyzer.

By comparing the optical power of the in band signal with the optical power of the out of band signals, the OSNR can be obtained.

In modern WDM systems with decreasing WDM channel spacing, it is difficult to distinguish between the in band signal and the out of band signals, which is necessary for a precise measurement of the respective optical power, and thus device complexity of a OSNR measurement arrangement and consequently, corresponding costs, are increased.

A further approach aims at removing neighbour WDM channels to perform the OSNR measurement. Obviously, said approach is only applicable within laboratory environments.

Moreover, in transparent networks, a signal may have passed transparent nodes and multiplexers and/or demultiplexers, which often incorporate means for suppressing noise in out of band frequency ranges. In this case, an accurate measurement of OSNR is not possible, either.

Hence it is an object of the present invention to provide an efficient and precise method of determining an OSNR and a corresponding optical system.

Regarding said method, this object is achieved by the following steps:

- modifying said WDM signal by means of at least one auxiliary signal thus obtaining a modified signal,

- transmitting said modified signal,

- receiving said modified signal

- determining said optical signal to noise ratio (OSNR) based on said received modified signal.

The inventive idea is to modify a regular WDM signal by using an auxiliary signal such that at least a component, i.e. a certain frequency/wavelength interval of said WDM signal, can be extracted after receiving said WDM signal, regardless of noise or other undesirable effects imparted on said WDM signal during a transmission or before receiving, in general. An optical or electrical power of said extractable component can be evaluated to determine the OSNR.

According to an advantageous embodiment of the present invention, said modifying of said WDM signal is performed by imposing an amplitude modulation on said WDM signal.

According to a further advantageous embodiment of the present invention, said amplitude of said WDM signal is modulated by said auxiliary signal. The so modulated WDM signal is in the further description referred to as modified signal.

Yet a further embodiment of the inventive method proposes to define a degree of modulation

$$m = delta\_P \; / \; P\_s \; << \; 1$$

wherein delta_P is a maximum change of an optical power of said WDM signal due to said amplitude modulation, and P_s is a maximum value of said optical power of said WDM signal without amplitude modulation. The auxiliary signal has preferably a sinus shape.

The low degree of modulation employed prevents noise that is added to a transmitted signal by e.g. fiber amplifiers such as Erbium-doped fiber amplifiers (EDFA) from being modulated by said auxiliary signal.

Another variant of the inventive method is characterized in that said auxiliary signal comprises a frequency within a range from approximately 0.1 kHz to approximately 1 MHz.

According to a further very advantageous embodiment of the present invention, an auxiliary current may directly be provided to a laser source, in particular for directly modulating said laser source. In this case, said auxiliary signal is e.g. a sinus-shaped current that may directly be added to a direct current (DC) supply of the laser source.

A further advantageous variant of the present invention is characterized by said step of determining comprising:

- selecting a WDM channel signal of said received modified signal, in particular by filtering said WDM channel.

This way, the interesting WDM channel an OSNR is to be determined for is separated from neighbour WDM channels for further processing.

Another advantageous embodiment of the present invention is characterized by said step of determining comprising:

- converting the WDM channel signal from the optical to the electrical domain, preferably by means of a photo diode, to obtain an electrical WDM channel signal.

The conversion is advantageously performed to enable a further processing of electrical signals. Preferably, a low-speed photo diode is employed for said conversion which on the other hand is fast enough not to affect a conversion of a frequency of said auxiliary signal itself.

A further very advantageous variant of the present invention is characterized by said step of determining comprising:

- extracting from said WDM channel signal a reference signal free of noise said modified signal may have been imparted with during transmission, and

- obtaining said optical signal to noise ratio depending on said reference signal and/or said WDM channel signal.

Extracting from said WDM channel signal a reference signal free of noise is possible in accordance with the above description, since said auxiliary signal is chosen such that at least a component, i.e. a certain frequency/wavelength interval of said WDM signal modified by said auxiliary signal, can be extracted after receiving said WDM signal, regardless of noise.

Another very sophisticated embodiment of the present invention is characterized by said step of extracting comprising:

- demodulating said WDM channel signal, preferably by means of a lock-in amplifier, to obtain said reference signal.

As already described above, only the WDM signal is modulated by said auxiliary signal when using a sufficient low degree of modulation. Noise imparted on said WDM signal, or on the modified signal, respectively, is not modulated by said auxiliary signal. Therefore, by demodulating said modified signal it is possible to reconstruct an optical or electrical power of said WDM signal without the influence of noise.

The principle of the lock-in amplifier per se is well known and is based on correlation, i.e. a correlation of a signal to be demodulated and of a second signal is performed, wherein said second signal must have the same frequency and phase as the signal to be demodulated.

According to yet a further advantageous embodiment of the present invention, frequency and phase information for said demodulation are provided to said lock-in amplifier.

Generally, said frequency and phase information may be derived from the WDM channel signal by means of a clock recovery device. Preferably a phase-locked-loop (PLL) is used for that.

After a successful demodulation of said WDM channel signal, the obtained reference signal can e.g. be compared to the WDM channel signal in its non-demodulated form. A difference concerning signal energy of those two signals enables to calculate the OSNR. This is because said reference signal, in contras to said WDM channel signal, does not comprise noise energy.

When choosing a frequency for the steps of modifying and demodulating depending on a WDM channel selected for OSNR measurement, as is proposed by another embodiment of the present invention, it is possible to perform the inventive OSNR measurement with different WDM channels.

For instance, a first WDM channel is modulated by an auxiliary signal having a first frequency. The lock-in amplifier is operated at said first frequency for determining the OSNR for the first WDM channel.

A second WDM channel may be modulated by another auxiliary signal having a second frequency. The lock-in amplifier is then operated at said second frequency for determining the OSNR for the second WDM channel.

For such a configuration, using a PLL is especially advantageous since it can be tuned to either the first or the second or further frequencies auxiliary signals may comprise.

The frequency selection for the PLL may also be performed by frequency trials, i.e. by periodically altering the demodulation frequency. The correct demodulation frequency will induce a locking of the PLL, whereas the wrong demodulation frequency will not.

As a further solution to the object of the present invention, an optical transmission according to claim 12 is proposed.

Further features and advantages of the present invention are presented below in the detailed description with reference to the drawings, in which

Fig. 1a shows an embodiment of an optical transmission system according to the present invention,

Fig. 1b shows in detail a section of the optical transmission system of Fig. 1a,

Fig. 2 shows a flow chart depicting an embodiment of the method according to the present invention, and

Fig. 3 shows a further embodiment of an inventive optical transmission system.

The optical transmission system 100 of depicted in Fig. la comprises a laser source 10 emitting a WDM signal s_wdm, wherein means for generating said WDM signal s_wdm such as laser diodes of different wavelengths and the like are not shown.

Said WDM signal s_wdm comprises according to the wavelength division multiplexing (WDM) principle several so-called WDM channels each of them being characterized by a certain wavelength or frequency range.

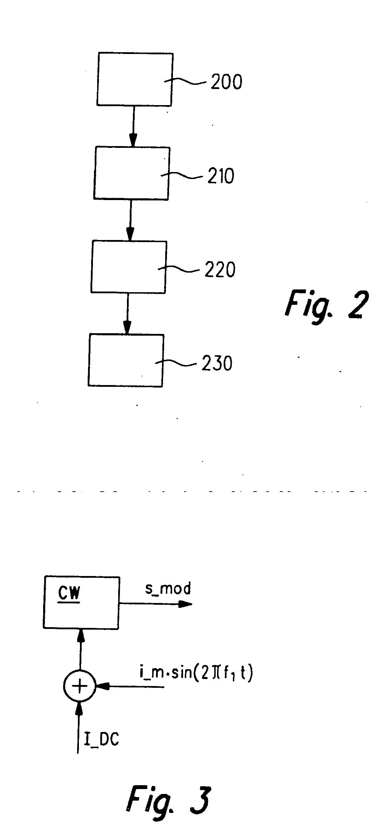

The WDM signal s_wdm is amplitude modulated by an auxiliary signal s_aux, which yields a modified signal s_mod. The amplitude modulation of said WDM signal is performed prior to entering an optical fiber 20 and represented by step 200 in the flow chart of Fig. 2.

Said auxiliary signal s_aux used for amplitude modulation of said WDM signal s_wdm is a sinus-shaped signal having a frequency f1 of about 1kHz. Furthermore, a degree m of modulation effected by said auxiliary signal s_aux is comparatively small:

$$m = delta\_P / P\_s \ll 1$$

wherein delta_P is a maximum change of an optical power of said WDM signal s_wdm due to said amplitude modulation, and P_s is a maximum value of said optical power of said WDM signal s_wdm without amplitude modulation.

While travelling the optical fiber 20, which also comprises optical fiber amplifiers (not shown) such as EDFAs, noise is imparted to said modified signal s mod. The addition of noise to said modified signal s_mod is mainly due to passing said optical amplifiers which effect said noise.

However, since the degree m of modulation for modifying said WDM signal s_wdm is chosen very small as described above, said noise effected by EDFAs within said optical fiber 20 is not modulated by said auxiliary signal s_aux.

After transmission 210 (Fig. 2) and receiving 220, the modified signal s_mod is filtered by means of an optical filter 30, which is part of step 230 of Fig. 2 subjected to determining the OSNR. Said filtering is done to select one of the plurality of WDM channels of said received modified signal s_mod.

At an output of the filter 30, a WDM channel signal c_wdm representing one distinct WDM channel is available, which is converted from the optical domain to the electrical domain by a photo diode 40 thus yielding an electrical WDM channel signal e_wdm.

Said electrical WDM channel signal e_wdm is forwarded to a signal processing section 50 which is depicted in detail in Fig. 1b.

Said signal processing section 50 comprises a lock-in amplifier 51 and digital signal processing means 52.

At its input, the lock-in amplifier 51 is provided with the electrical WDM channel signal e_wdm, which is demodulated within said lock-in amplifier 51. For this purpose the lock-in amplifier 51 is provided with frequency and phase information concerning said auxiliary signal s_aux the WDM signal s_wdm has been modulated by.

Said frequency and phase information may be supplied to said lock-in amplifier 51 by a phase-locked loop (PLL) which is not shown. More precisely, the PLL is tuned to the frequency f1=1kHz of the auxiliary signal s_aux and the electrical WDM channel signal e_wdm is subsequently demodulated within said lock-in amplifier 51.

This demodulation by the lock-in amplifier 51 yields a power of the electrical WDM channel signal e_wdm without the power of the noise added during transmission via said optical fiber, because said noise has not been modulated by said auxiliary signal s_aux as already explained above.

Together with the overall power of the electrical WDM channel signal e_wdm, i.e. with the power including noise power added during transmission via said optical fiber, the noise power can be derived and thus the optical signal to noise ratio (OSNR) can be calculated.

Said calculation of the OSNR is performed by said digital signal processing means 52, which provide the OSNR value as an output variable as depicted in Fig. 2.

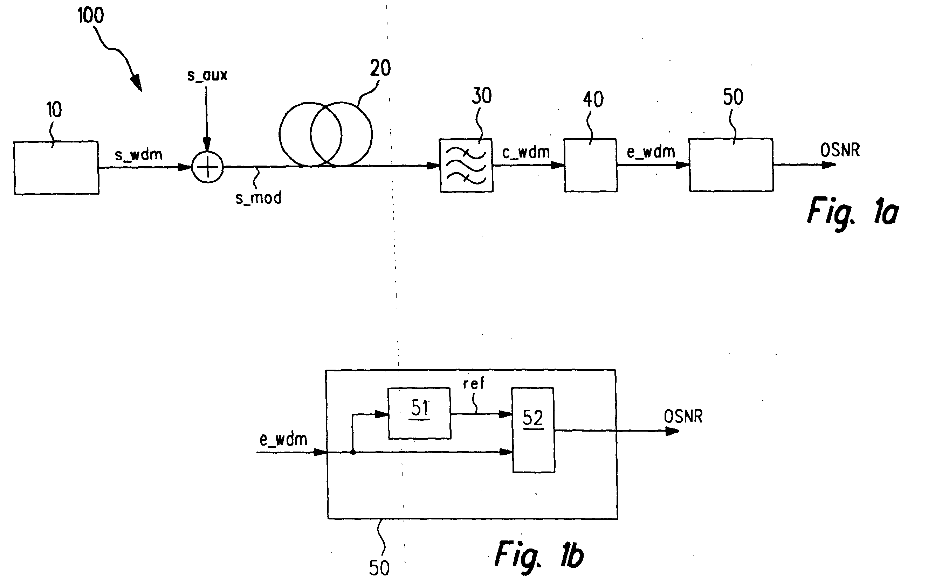

According to a further advantageous embodiment of the present invention, instead of providing the WDM signal s_wdm with the amplitude modulation via said auxiliary signal s_aux in the manner depicted in Fig. 1a, it is also possible to directly modulate a direct current I_DC of a continuous wave (CW) laser CW with a corresponding auxiliary current signal as depicted in Fig. 3.

In accordance with a further embodiment of the present invention, said photo diode 40 is of the low-speed type, which is sufficient to process the amplitude modulation of the auxiliary signal s_aux.

Generally, in contrast to prior art approaches to measure an OSNR, the method according to the present invention does not require expensive high-speed measurement equipment such as optical spectrum analyzers or the like.

A low frequency processing for handling the described low frequency amplitude modulation and signal processing means 52 to calculate the OSNR is sufficient to obtain precise OSNR measurements even for systems with decreased channel spacing of neighbour WDM channels where contemporary approaches do not lead to precise measurement results.

According to a further embodiment of the present invention, a low frequency amplitude modulation of said WDM signal s_wdm is provided, wherein neighbour WDM channels are assigned different frequency values f1 and f2 for amplitude modulation. In this embodiment, an OSNR of different WDM channels can be determined without unwanted interaction of neighbour WDM channels. To achieve this, for measuring the corresponding WDM channel, the lock-in amplifier 51 has to be tuned to the respective frequency f1, f2.

This method has the advantage of being independent of the WDM channel spacing, since neighbour WDM channels that could interfere with OSNR measurement of prior art systems are discriminated through their respective modulation frequency f1, f2.

**Claims**

1. Method of determining an optical signal to noise ratio (OSNR) in an optical system (100), in particular a transparent hybrid network or an optical transmission system (100) with wavelength division multiplexing (WDM), wherein a signal (s_wdm), in particular a wavelength division multiplexing (WDM) signal, is transmitted, **characterized by** the following steps:

   - modifying said WDM signal (s_wdm) by means of at least one auxiliary signal (s_aux) thus obtaining a modified signal (s_mod),
   - transmitting said modified signal (s_mod),
   - receiving said modified signal (s_mod),
   - determining said optical signal to noise ratio (OSNR) based on said received modified signal (s_mod).

2. Method according to claim 1, **characterized in that** said modifying of said WDM signal (s_wdm) is performed by imposing an amplitude modulation on said WDM signal (s_wdm).

3. Method according to claim 2, wherein an amplitude of said WDM signal (s_wdm) is modulated by said auxiliary signal (s_aux).

4. Method according to one of the claims 2 to 3, **characterized by** a degree of modulation

$$m = delta\_P / P\_s << 1,$$

   wherein delta_P is a maximum change of an optical power of said WDNI signal (s_wdm) due to said amplitude modulation, and P_s is a maximum value of said optical power of said WDM signal (s_wdm) without amplitude modulation.

5. Method according to one of the preceding claims, **characterized in that** said auxiliary signal (s_aux) comprises a frequency within a range from approximately 0.1 kHz to approximately 1 MHz.

6. Method according to one of the preceding claims, **characterized by** providing an auxiliary current (i_aux) to a laser source (10), in particular for directly modulating said laser source (10).

7. Method according to one of the preceding claims, **characterized by** said step of determining comprising:

   - selecting a WDM channel signal (c_wdm) of said received modified signal (s_mod), in particular by filtering said WDM channel.

8. Method according to claim 7, **characterized by** said step of determining comprising:

   - converting the WDM channel signal (c_wdm) from the optical to the electrical domain, preferably by means of a photo diode (40), to obtain an electrical WDM channel signal (e_wdm).

9. Method according to one of the claims 7 to 8, **characterized by** said step of determining comprising:

   - extracting from said WDM channel signal (c_wdm, e_wdm) a reference signal (ref) free of noise said modified signal (s_mod) may have been imparted with during transmission, and
   - obtaining said optical signal to noise ratio (OSNR) depending on said reference signal (ref) and/or said WDM channel signal (c_wdm, e_wdm).

10. Method according to claim 9, **characterized by** said step of extracting comprising:

    - demodulating said WDM signal (c wdm, e wdm), preferably by means of a lock-in amplifier (51), to obtain said reference signal (ref).

11. Method according to claim 10, **characterized by** providing frequency and phase information for said demodulation, wherein said phase information is preferably provided by a phase-locked-loop (PLL).

12. Method according to claim 10 or 11, **characterized by** choosing a frequency for the steps of modifying and demodulating depending on a WDM channel selected for OSNR measurement.

13. Optical transmission system (100) for transmitting a signal (s_wdm), in particular a wavelength division multiplexing (WDM) signal, capable of performing the method according to one of the preceding claims.

Fig. 1a

Fig. 1b

EP 1 626 512 A1

Fig. 2

s_mod

$i\_m \cdot \sin(2\pi f_1 t)$

I_DC

Fig. 3

**European Patent Office**

**EUROPEAN SEARCH REPORT**

Application Number

EP 04 29 2019

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 654 816 A (FISHMAN DANIEL A) 5 August 1997 (1997-08-05) | 1-3,5-9 | H04B10/08 |
| A | * column 1, line 29 - column 4, line 38 * <br> * column 6, line 32 - line 55 * <br> ----- | 4,10-13 | |
| X | US 5 513 029 A (ROBERTS KIM B) 30 April 1996 (1996-04-30) | 1-3,5-9 | |
| A | * column 3, line 4 - column 4, line 17 * <br> * column 5, line 1 - column 6, line 22 * <br> * column 7, line 16 - column 10, line 33 * <br> * figures 2,3 * <br> ----- | 4,10-13 | |
| A | EP 1 355 440 A (FUJITSU LTD) 22 October 2003 (2003-10-22) <br> * paragraph [0014] * <br> * paragraph [0017] * <br> * paragraph [0022] * <br> * paragraph [0024] * <br> * paragraph [0028] * <br> * paragraph [0142] - paragraph [0158] * <br> ----- | 1-13 | |
| A | US 2004/101300 A1 (SCHEX ANTON  ET AL) 27 May 2004 (2004-05-27) <br> * paragraph [0001] - paragraph [0029] * <br> * claim 1 * <br> ----- | 1-13 | TECHNICAL FIELDS SEARCHED (Int.Cl.7) <br> H04B |

The present search report has been drawn up for all claims

| Place of search | Date of completion of the search | Examiner |
|---|---|---|
| The Hague | 18 January 2005 | Vaquero, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**EP 1 626 512 A1**

## ANNEX TO THE EUROPEAN SEARCH REPORT
## ON EUROPEAN PATENT APPLICATION NO.

EP 04 29 2019

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2005

| Patent document cited in search report | | Publication date | Patent family member(s) | | Publication date |
|---|---|---|---|---|---|
| US 5654816 | A | 05-08-1997 | AU | 693579 B2 | 02-07-1998 |
| | | | AU | 3010395 A | 07-03-1996 |
| | | | CA | 2155693 A1 | 26-02-1996 |
| | | | EP | 0703678 A2 | 27-03-1996 |
| | | | JP | 8079173 A | 22-03-1996 |
| US 5513029 | A | 30-04-1996 | NONE | | |
| EP 1355440 | A | 22-10-2003 | JP | 2003318833 A | 07-11-2003 |
| | | | EP | 1355440 A2 | 22-10-2003 |
| | | | US | 2004213566 A1 | 28-10-2004 |
| US 2004101300 | A1 | 27-05-2004 | DE | 10021860 A1 | 15-11-2001 |
| | | | WO | 0186839 A1 | 15-11-2001 |
| | | | EP | 1279243 A1 | 29-01-2003 |

EPO FORM P0459

For more details about this annex : see Official Journal of the European Patent Office, No. 12/82